# EUROPEAN PATENT SPECIFICATION

(11) **EP 1 580 985 B1**
(45) Date of publication and mention of the grant of the patent: **01.08.2012**
(21) Application number: 05006740.4
(22) Date of filing: 29.03.2005
(51) Int. Cl.: H04N 5/232, H04N 5/77

(54) **Image capture apparatus, image capture method, and image capture control program**
Vorrichtung, Verfahren und Steuerungsprogramm zur Bildaufnahme
Dispositif, méthode et programme de contrôle de capture d'image

(30) Priority: 26.03.2004 JP 2004091506
(43) Date of publication of application: 28.09.2005
(73) Proprietor: CASIO COMPUTER CO., LTD., Shibuya-ku, Tokyo (JP)
(72) Inventor: Watanabe, Akira IPD Casio Computer Co., Ltd., Hamura-shi Tokyo 205-8555 (JP)
(74) Representative: Grünecker, Kinkeldey, Stockmair & Schwanhäusser

(56) References cited:
- JP-A- 2 230 875
- JP-A- 8 076 214
- US-A- 5 760 830

## Description

The present invention relates to an image capture apparatus which captures and records a still picture image during moving picture image capture, and to an image capture control method and an image capture control program.

At present, image capture apparatuses having a function of capturing a still picture image during moving picture image capture and a zoom function have been realized. As a processing method applied to the image capture apparatus, for example, as described in Japanese Patent Application Publication (KOKAI) No. 2002-135797, there is a processing method in which a still picture image recorded during moving picture image capture is output.

However, in order to carry out the recording of a still picture image during moving picture image capture as described above, it is necessary to operate a shutter key for capturing a still picture image. With respect to a conventional moving picture image capturing apparatus, a shutter button is arranged such that a user can hold the apparatus body with one hand, and instruct starting and ending of capture of moving picture image by means of a shutter button in the state of holding the apparatus. However, it is not assumed that a still picture image is captured in response to an operation of the shutter button. Accordingly, if the user captures a still picture image during moving picture image capture, a captured still picture image is affected by movement of the hands.

An object of the present invention is to provide an image capture apparatus, a capture control method and a capture control program by which blurring can be prevented in a still picture image capturing during moving picture image capture.

According to an embodiment of the present invention, an image capture apparatus comprises:
an image sensor which outputs an image;
a moving picture image recording instruction unit which issues a first instruction for recording the image obtained by the image sensor as a moving picture image;
a still picture image recording instruction unit which issues a second instruction for recording the image obtained by the image sensor as a still picture image;
a change instruction unit which issues a third instruction for changing a magnification of the image while recording the image as a moving picture image; and
a cancel unit which invalidates the second instruction during a period when the magnification of the image is being changed.

According to another embodiment of the present invention, an image capture method comprises steps of:
issuing a first instruction for recording an image obtained by an image sensor as a moving picture image;
issuing a second instruction for recording the image obtained by the image sensor as a still picture image;
issuing a third instruction for changing a magnification of the image while recording the image as a moving picture image; and
invalidating the second instruction during a period when the magnification of the image is being changed.

According to another embodiment of the present invention, a computer program product configured to store program instructions for execution on a computer system enables the computer system to perform:
issuing a first instruction for recording an image obtained by an image sensor as a moving picture image;
issuing a second instruction for recording the image obtained by the image sensor as a still picture image;
issuing a third instruction for changing a magnification of the image while recording the image as a moving picture image; and
invalidating the second instruction during a period when the magnification of the image is being changed.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration of a digital camera according to the first embodiment of the present invention;
FIG. 2 shows a configuration of an image memory;
FIG. 3 is a flowchart showing a processing procedure in the first embodiment of the invention;
FIG. 4 is a flowchart showing a processing procedure in the second embodiment of the invention;
FIG. 5 is a flowchart showing a processing procedure in the third embodiment of the invention; and
FIG. 6 is a flowchart showing a processing procedure in the fourth embodiment of the invention.

An embodiment of a digital camera according to the present invention will now be described with reference to the accompanying drawings.

### (First Embodiment)

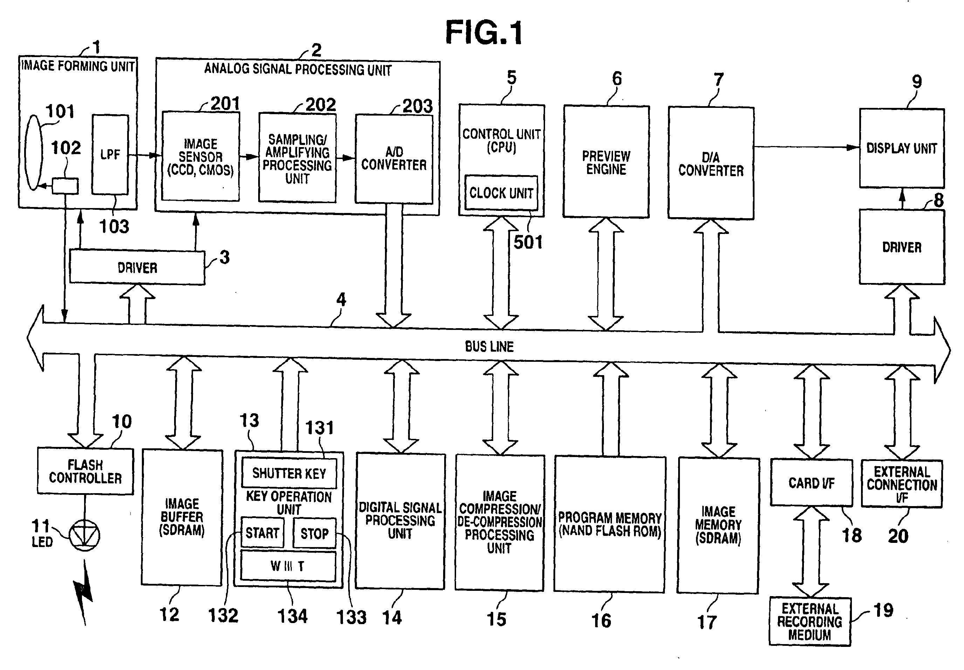

FIG. 1 is a block diagram showing a configuration of a digital camera having a function of capturing a still picture image during moving picture image capture according to an embodiment of the present invention. An image forming unit 1 has an objective lens 101, a zoom driving unit 102, and a low-pass filter (LPF) 103. The objective lens 101 is an optical system having a zoom function, and the zoom driving unit 102 is formed so as to have a stepping motor which drives the objective lens 101 by being controlled by a driver 3. Information on whether or not the zoom driving unit 102 is driving is output to a control unit 5 on a real time basis. The LPF 103 is a crystal low pass filter, and is provided in order to prevent moire from occurring.

An analog signal processing unit 2 having an image sensor 201 such as a CCD, a CMOS, or the like, a sampling/amplifying processing unit 202, and an analog-to-digital (A/D) converter 203 is connected at the subsequent stage of the image forming unit 1. The image sensor 201 converts the strength of the respective colors of RGB of an object image formed by the lens 101 via the LPF 103 into current values. With respect to the image sensor 201, a charge storage time which the control unit 5 has set is supplied as a shutter pulse to the driver 3, and the image sensor 201 is driven by the driver 3 in accordance with the shutter pulse so that the charge storage time, i.e., an exposure time is controlled. Namely, the image sensor 201 functions as an electronic shutter. The sampling/amplifying processing unit 202 carries out correlation double sampling processing or signal amplifying processing in order to suppress noise or color irregularity in an image signal from the image sensor 201. The A/D converter 203 converts an analog signal onto which the sampling/amplifying processing unit 202 has carried out sampling/amplification into a digital signal, and converts the digital signal into 12-bit data with respect to the respective colors of RGB and CYMG, and outputs those to a bus line 4.

The control unit 5 comprises a microcomputer having a CPU and a peripheral circuit thereof, a RAM which is a work memory of the CPU, and a clock unit 501 clocking on the basis of a built-in clock (not shown), or the like, and controls the entire digital camera on the basis of a program stored in a program memory 16 which will be described later. A preview engine 6 is a circuit unit which carries out sampling processing for displaying digital data input via the analog signal processing unit 2, or digital data stored in an image buffer 12 after detecting a shutter operation, and digital data stored in an image memory 17, on a display unit 9. A digital-to-analog (D/A) converter 7 converts the digital data sampled by the preview engine 6 into analog data, and outputs the analog data to the display unit 9 at the subsequent stage. Although not shown, the D/A converter 7 has a buffer region at which digital data to be displayed on the display unit 9 at the subsequent stage is temporarily stored. A driver 8 drives the display unit 9 on the basis of a control signal input via a key operation unit 13 and the control unit 5. The display unit 9 includes a color TFT liquid crystal device on which a preview image can be displayed.

A flash controller 10 controls an LED 11 for flash, and controls charging at a time of emitting a flash as well. The image buffer (SD RAM) 12 is a memory at which digital data which is input via the analog signal processing unit 2 or a digital signal processing unit 14, and is processed at the digital signal processing unit 14 is temporarily stored.
The key operation unit 13 has external operating means such as a shutter key 131, a start key 132 and a stop key 133 for moving picture image capture, and a zoom key 134, and a switching key to a moving picture image capture mode in a recording/playback mode and a recording mode, an arrow key, a menu key, and the like which are not shown.

The shutter key 131 is a key for instructing still picture image capture, and the start key 132 is a key for instructing start of moving picture image capture, and the stop key 133 is a key for instructing stop of moving picture image capture. The zoom key 134 is a key which is a seesaw type that the both ends thereof can be operated, and which is for reducing and increasing the magnification of the objective lens 101.

The digital signal processing unit 14 carries out white balance processing, color processing, gradation processing, edge enhancement with respect to digital data (uncompressed raw image data) input via the analog signal processing unit 2. An image compression/de-compression processing unit 15 compresses to encode digital data (uncompressed raw image data) input via the digital signal processing unit 14 according to JPEG system or MPEG system, and decompresses (expands) a JPEG system file or an MPEG system file in a playback mode. In a case of moving picture image capture, a moving picture image file (a JPEG2000 system or an MPEG-4 system file) is prepared by carrying out a series of operations of the analog signal processing unit 2, the image buffer 12, the digital signal processing unit 14, and up to the image compression/de-compression processing unit 15.

A program memory (NAND type flash memory) 16 stores various programs loaded into the control unit 5, and stores various information such as EV values, color correction information, and the like in units of tables, and moreover, stores various information to be embedded in a file in accordance with the DCF standard. The image memory 17 stores digital data converted into a file format. A card interface (I/F) 18 is to support data conversion between an external storage medium 19 and the digital camera. The external storage medium 19 comprises a memory which is attachable and detachable, such as a compact flash, a memory stick, an SD card, and the like. An external connection I/F 20 comprises a slot for a USB connector.

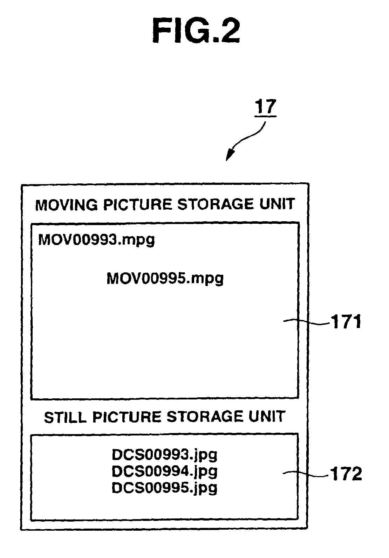

FIG. 2 shows a configuration of the image memory 17. A moving picture image storage unit 171 and a still picture image storage unit 172 are included in the image memory 17. Moving picture image data is stored with a file name in the moving picture image storage unit 171, and in the same way, still picture image data is stored with a file name in the still picture image storage unit 172.

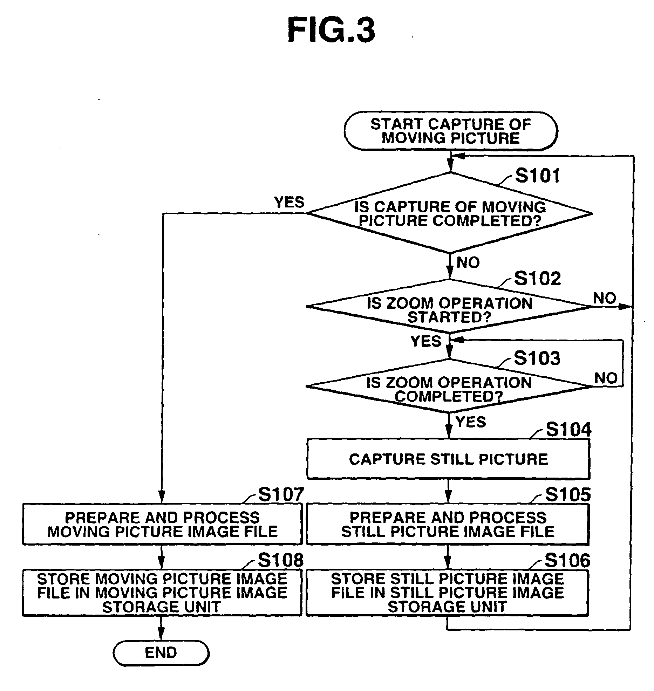

In the present embodiment having the above-described configuration, when a user sets the moving picture image capture mode by operating the switching key provided at the key operation unit 13, and operates the start key 132 in order to start moving picture image capture, the control unit 5 starts the moving picture image capture, and successively accumulates frame data of the moving picture image in the image buffer 12. The control unit 5 executes the processing when the moving picture image capture starts in accordance with the flowchart shown in FIG. 3 on the basis of a program loaded in advance from the program memory 16.

Namely, it is determined on the basis of the presence/absence of an operation of the stop key 133 whether or not the moving picture image capture is completed (step S101). When the moving picture image capture has not been completed and is still being continued, it is determined on the basis of the presence/absence of an operation of the zoom key 134 whether or not the user has started a zoom operation (step S102). When the user starts the zoom operation during the moving picture image capture (step S102; YES), it is determined whether or not the zoom operation has been completed (step S103). While the determination in step S103 is NO, i.e., until the zoom operation is completed, the routine does not proceed to the next step. Accordingly, because still picture image capture processing is not executed even if the user operates the shutter key 131 during that time, the still picture image capture is substantially prohibited. Therefore, there is no possibility that a still picture image with blurring due to the conspicuous movement of the hands when the user carries out the zoom operation is imaged.

When the determination in step S103 is YES due to the user completing the zoom operation, still picture image capture processing is carried out (step S104), and still picture image data immediately after the end of the zoom operation is taken into the image buffer 12. Moreover, a still picture image file is prepared from the image data (step S105), and the prepared still picture image file is stored in the still picture image storage unit 172 (step S106).

At that time, because the zoom operation is an operation carried out in order to determine a next capturing composition, there is a high possibility that the composition immediately after the end of the zoom operation is a composition in a timing in which the user has intended to operate the shutter key. Therefore, still picture image capture is automatically carried out at a point in time when the end of the zoom operation is detected, and the still picture image file is stored in the still picture image storage unit 172, and in accordance therewith, the still picture image having a high possibility to have a composition in a timing which is intended to operate the shutter key, and having no blurring can be automatically captured.

When the user operates the stop key 133 in order to complete the moving picture image capture (step S101; YES), a moving image file formed from the frame data of the moving picture image which have been accumulated in the image buffer 12 up to that point in time is prepared (step S107). Moreover, the prepared moving picture image file is named a file name, and is stored in the moving picture image storage unit 171 of the image memory 17 (step S108), and the moving picture image capture is completed.

### (Second Embodiment)

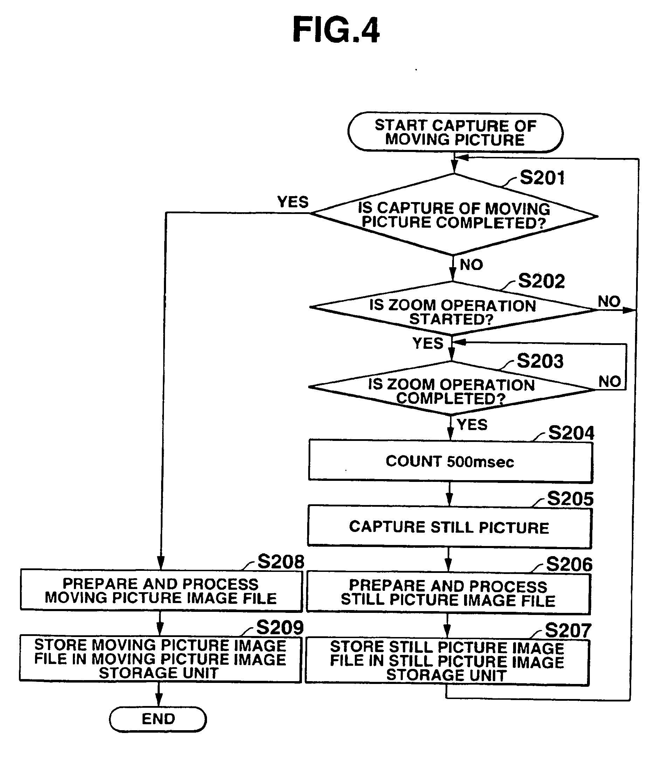

FIG. 4 is a flowchart showing a processing procedure in a second embodiment of the present invention. In this flowchart, steps S201 to S203 and S205 to S209 excluding step S204 are the same processings as steps S101 to S108 in the flowchart of FIG. 3 showing the first embodiment described above. Then, in step S204 added in the present embodiment, counting 500 msec is carried out on the basis of a clock which a clock unit 501 clocks, and the still picture image capture described above (step S205) is carried out at a point in time when 500 msec has passed after a user had completed a zoom operation.

Namely, there is a possibility that the finger of the user is still moving immediately after the zoom operation has been completed, and if a still picture image is captured at that point in time, there is a possibility that blurring may be brought about on the still picture image. Accordingly, due to the still picture image capture being carried out after 500 msec from the point in time when the end of the zoom operation is detected, the possibility that blurring is brought about on the captured still picture image can be removed, and as a result, a still picture image without blurring can be exactly captured during moving picture image capture.

Note that 500 msec in the present embodiment is one example as a predetermined micro-time, and it may be shorter or longer.

### (Third Embodiment)

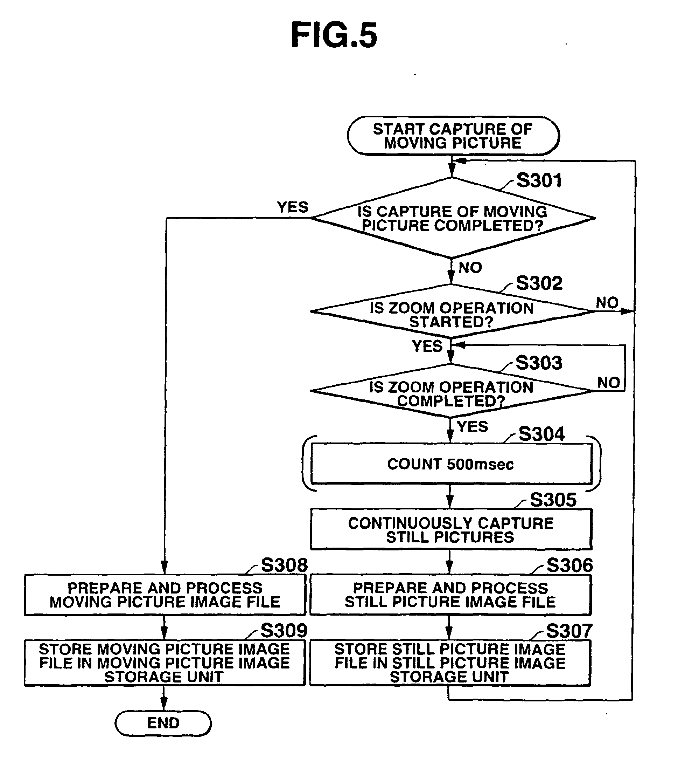

FIG. 5 is the flowchart showing a processing procedure in a third embodiment of the present invention. In this flowchart, steps S301 to S309 excluding step S305 are the same processings as steps S201 to S209 excluding step S205 in the flowchart of FIG. 4 showing the second embodiment described above. Then, at the only different step S305, a continuous still picture image capture is carried out.

Namely, still picture image data is taken into the image buffer 12 every predetermined timing at the point in time when 500 msec has passed after a user had completed a zoom operation, and a plurality of still picture image data is captured. Thereafter, a still picture image file formed of a number of still picture image data, or a still picture image file for each still picture image data is prepared (step S306), and the prepared still picture image file is stored in a still picture image storage unit 172 (step S307).

Accordingly, in the present embodiment, a plurality of still picture images is stored after the user has completed the zoom operation. As described above, there is a high possibility that the composition immediately after the end of the zoom operation is a composition in a timing in which the user has intended to operate a shutter key. Therefore, at the time of capturing a moving object, such as at the time of capturing athletic sports, and the like, the composition in a timing in which the user has intended to operate the shutter key can be exactly captured in addition to a moving picture image.

Note that, in the illustrated flowchart, 500 msec count processing is carried out in step S304, continuous still picture image capture may be started immediately after the end of the zoom operation without carrying out the waiting processing.

### (Fourth Embodiment)

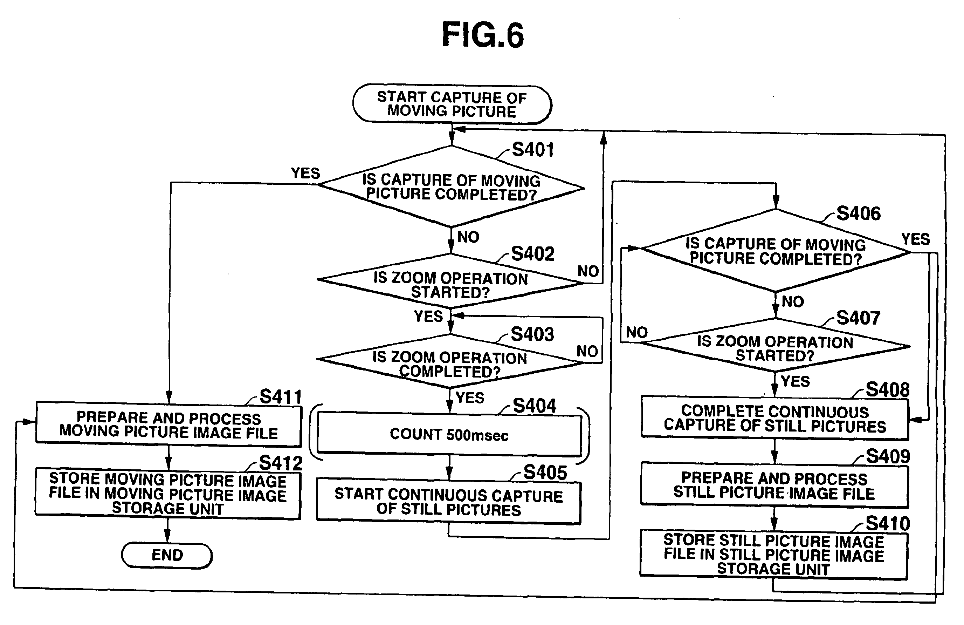

FIG. 6 is a flowchart showing a processing procedure in a fourth embodiment of the present invention. When a user sets a moving picture image capture mode by operating the switching key provided at the key operation unit 13, and operates the start key 132 in order to start the moving picture image capture, the control unit 5 starts the moving picture image capture, and successively stores frame data of a moving picture image in the image buffer 12. The control unit 5 executes the processing in accordance with the flowchart on the basis of a program loaded in advance from the program memory 16 accompanying the moving picture image capture.

Namely, it is determined whether or not the moving picture image capture is completed on the basis of the presence/absence of an operation of the stop key 133 (step S401). When the moving picture image capture has not been completed and is still being continued, it is determined whether or not the user has started a zoom operation on the basis of the presence/absence of an operation of the zoom key 134 (step S402). Then, when the operation of the zoom key 134 by the user is detected during the moving picture image capture (step S402; YES), it is determined whether or not the zoom operation has been completed (step S403). While the determination in step S403 is NO, i.e., until the zoom operation is completed, the routine does not proceed to the next step. Accordingly, because still picture image capture processing is not executed even if the user operates the shutter key 131 during that time, the still picture image capture is substantially prohibited. Therefore, there is no possibility that a still picture image with blurring due to the conspicuous movement of the hands when the user carries out a zoom operation is imaged.

Then, when the determination in step S403 is YES due to the user completing the zoom operation, after 500 msec count processing is carried out (step S404), continuous still picture image capture is started (step S405), and image data is taken into the image buffer 12 every predetermined timing, and the still picture image data is stored. It is determined whether or not the moving picture image capture is completed (step S406), and when it is not completed, it is determined whether or not the zoom operation is started again (step S407).

Then, when the user has started the zoom operation again during the moving picture image capture, the continuous capture is completed at that point in time (step S408). Thereafter, a still picture image file comprising a plurality of still picture image data stored in the image buffer 12, or a still picture image file for each still picture image data is prepared (step S409), and the prepared still picture image file is stored in a still picture image storage unit 172 (step S410).

Accordingly, in the present embodiment, the continuous capture of the still picture images is carried out during the time from the point in time when the zoom operation has been completed up to the time when the next zoom operation is started during the moving picture image capture. Therefore, the continuous capture of still picture images is carried out only while movement of the hands is stopped due to the end of the zoom operation, and the movement of the hands is not brought about due to the next zoom operation, therefore, all the still picture images which are continuously captured can be made still picture images without any blurring.

Then, when the user operates the stop key 133 in order to complete the moving picture image capture (step S401; YES), a moving image file comprising the frame data of the moving picture image which have been stored in the image buffer 12 up to that point in time is prepared (step S411). Moreover, the prepared moving picture image file is named a file name, and is stored in the moving picture image storage unit 171 of the image memory 17 (step S412), and the moving picture image capture is completed.

On the other hand, after the continuous capturing of the still picture images has been started (step S405), when the user does not carry out the zoom operation again (step S407; NO), and operates the stop key 133 in order to complete the moving picture image capture, the determination in step S406 is YES. In this case, as shown in the flowchart, the processings in steps S408 to S410 described above are executed, and the processings in steps S411 and S412 are executed. Accordingly, when the user has completed the moving picture image capture without carrying out the zoom operation after starting the continuous capture of still picture images, the continuous capture is completed at the same time as the end of the moving picture image capture.

Note, in the illustrated flowchart, 500 msec count processing is carried out in step S404. However, the continuous capture of still picture images may be started immediately after the end of the zoom operation without carrying out the count processing.

Note that, in the present embodiment, a digital camera is described as an example. However, the present invention can be applied to other equipment having a moving picture image capture function, such as a video camera, in addition to the digital video camera.

## Claims

1. An image capture apparatus **characterized by** comprising:
an image sensor (1) which outputs an image;
a moving picture image recording instruction unit (132) which issues a first instruction for recording the image obtained by the image sensor as a moving picture image;
a still picture image recording instruction unit (131) which issues a second instruction for recording the image obtained by the image sensor as a still picture image;
a change instruction unit (134) which issues a third instruction for changing a magnification of the image while recording the image as a moving picture image; and
a cancel unit (5) which invalidates the second instruction during a period when the magnification of the image is being changed.

2. The image capture apparatus according to claim 1, **characterized by** further comprising:
an end detection unit (5) which detects an end of changing the magnification of the image; and
a control unit (5) which validates the second instruction when the end detection unit detects the end of changing.

3. The image capture apparatus according to claim 2, **characterized by** further comprising:
a count unit (501, 5) which counts a predetermined time after the end of changing the magnification of the image; and wherein
the control unit (5) validates the second instruction after the count unit has counted the predetermined time.

4. The image capture apparatus according to claim 2, **characterized by** further comprising a still picture image recording unit (172) which records the image as a still picture image when the second instruction is issued.

5. The image capture apparatus according to claim 4, **characterized by** further comprising:
a recording instruction detection unit which detects the first instruction during recording of the image as a still picture image by the still picture image recording unit (132); and
a moving picture image recording unit (171) which records the image after the recording of the image as a still picture image by the still picture image recording unit is completed, when the first instruction is issued.

6. The image capture apparatus according to claim 1, **characterized by** further comprising:
a lens (101) which forms an image on the image sensor;
a driving unit (102) which drives the lens;
an operation control unit (5) which controls operation of the driving unit in accordance with the third instruction;
a sensing unit (5) which senses an operating state of the driving unit; and
a determining unit (5) which determines whether or not the magnification of the image is changed based on the operating state of the driving unit sensed by the sensing unit.

7. An image capture method **characterized by** comprising steps of:
issuing a first instruction for recording an image obtained by an image sensor as a moving picture image;
issuing a second instruction for recording the image obtained by the image sensor as a still picture image;
issuing a third instruction for changing a magnification of the image while recording the image as a moving picture image; and
invalidating the second instruction during a period when the magnification of the image is being changed.

8. The image capture method according to claim 7, **characterized by** further comprising steps of:
detecting an end of changing the magnification of the image; and
validating the second instruction when the end of changing is detected.

9. The image capture method according to claim 8, **characterized by** further comprising steps of counting a predetermined time after the end of changing the magnification of the image; and wherein the second instruction is validated after the count unit has counted the predetermined time.

10. The image capture method according to claim 8, **characterized by** further comprising steps of recording the image as a still picture image when the second instruction is issued.

11. The image capture method according to claim 10, **characterized by** further comprising steps of:
detecting the first instruction during recording of the image as a still picture image; and
recording the image after the recording of the image as a still picture image is completed, when the first instruction is issued.

12. A computer program product configured to store program instructions for execution on a computer system enabling the computer system to perform:
issuing a first instruction for recording an image obtained by an image sensor as a moving picture image;
issuing a second instruction for recording the image obtained by the image sensor as a still picture image;
issuing a third instruction for changing a magnification of the image while recording the image as a moving picture image; and
invalidating the second instruction during a period when the magnification of the image is being changed.

13. The computer program product according to claim 12, enabling the computer system to further perform:
detecting an end of changing the magnification of the image; and
validating the second instruction when the end of changing is detected.

14. The computer program product according to claim 13, enabling the computer system to further perform counting a predetermined time after the end of changing the magnification of the image; and wherein the second instruction is validated after the count unit has counted the predetermined time.

15. The computer program product according to claim 13, enabling the computer system to further perform recording the image as a still picture image when the second instruction is issued.

16. The computer program product according to claim 15, enabling the computer system to further perform:
detecting the first instruction during recording of the image as a still picture image; and
recording the image after the recording of the image as a still picture image is completed, when the first instruction is issued.

## Patentansprüche

1. Bildaufnahme-Vorrichtung, **dadurch gekennzeichnet, dass** sie umfasst:
einen Bildsensor (1), der ein Bild ausgibt;
eine Bewegtbildaufzeichnungs-Anweisungseinheit (132), die eine erste Anweisung zum Aufzeichnen des mit dem Bildsensor gewonnenen Bildes als ein Bewegtbild ausgibt;
eine Standbildaufzeichnungs-Anweisungseinheit (131), die eine zweite Anweisung zum Aufzeichnen des mit dem Bildsensor gewonnenen Bildes als ein Standbild ausgibt;
eine Änderungs-Anweisungseinheit (134), die eine dritte Anweisung zum Ändern einer Vergrößerung des Bildes beim Aufzeichnen des Bildes als ein Bewegtbild ausgibt; und
eine Aufhebungseinheit (5), die die zweite Anweisung während einer Periode außer Kraft setzt, in der die Vergrößerung des Bildes geändert wird.

2. Bildaufnahme-Vorrichtung nach Anspruch 1, **dadurch gekennzeichnet, dass** sie des Weiteren umfasst:
eine Abschluss-Erkennungseinheit (5), die einen Abschluss des Änderns der Vergrößerung des Bildes erkennt; und
eine Steuereinheit (5), die die zweite Anweisung in Kraft setzt, wenn die Abschluss-Erkennungseinheit den Abschluss des Änderns erkennt.

3. Bildaufnahme-Vorrichtung nach Anspruch 2, **dadurch gekennzeichnet, dass** sie des Weiteren umfasst:
eine Zähleinheit (501, 5), die eine vorgegebene Zeit nach dem Abschluss des Änderns der Vergrößerung des Bildes zählt; und wobei
die Steuereinheit (5) die zweite Anweisung in Kraft setzt, wenn die Zähleinheit die vorgegebene Zeit gezählt hat.

4. Bildaufnahme-Vorrichtung nach Anspruch 2, **dadurch gekennzeichnet, dass** sie des Weiteren eine Standbild-Aufzeichnungseinheit (172) umfasst, die das Bild als ein Standbild aufzeichnet, wenn die zweite Anweisung ausgegeben wird.

5. Bildaufnahme-Vorrichtung nach Anspruch 4, **dadurch gekennzeichnet, dass** sie des Weiteren umfasst:
eine Aufzeichnungsanweisungs-Erkennungseinheit, die die erste Anweisung beim Aufzeichnen des Bildes als ein Standbild mit der Standbild-Aufzeichnungseinheit (132) erkennt; und
eine Bewegtbild-Aufzeichnungseinheit (171), die das Bild aufzeichnet, nachdem das Aufzeichnen des Bildes als ein Standbild mit der Standbild-Aufzeichnungseinheit abgeschlossen ist, wenn die erste Anweisung ausgegeben wird.

6. Bildaufnahme-Vorrichtung nach Anspruch 1, **dadurch gekennzeichnet, dass** sie des Weiteren umfasst:
ein Objektiv (101), das ein Bild auf dem Bildsensor erzeugt;
eine Ansteuereinheit (102), die das Objektiv ansteuert;
eine Funktions-Steuereinheit (5), die Funktion der Ansteuereinheit entsprechend der dritten Anweisung steuert;
eine Erfassungseinheit (5), die einen Funktionszustand der Ansteuereinheit erfasst; und
eine Feststelleinheit (5), die auf Basis des durch die Erfassungseinheit erfassten Funktionszustandes der Ansteuereinheit feststellt, ob die Vergrößerung des Bildes geändert wird oder nicht.

7. Bildaufnahme-Verfahren, **dadurch gekennzeichnet, dass** es die folgenden Schritte umfasst:
Ausgeben einer ersten Anweisung zum Aufzeichnen eines mit einem Bildsensor gewonnenen Bildes als ein Bewegtbild;
Ausgeben einer zweiten Anweisung zum Aufzeichnen des mit dem Bildsensor gewonnenen Bildes als ein Standbild;
Ausgeben einer dritten Anweisung zum Ändern einer Vergrößerung des Bildes beim Aufzeichnen des Bildes als ein Bewegtbild; und
Außer-Kraft-Setzen der zweiten Anweisung während einer Periode, in der die Vergrößerung des Bildes geändert wird.

8. Bildaufnahme-Verfahren nach Anspruch 7, **dadurch gekennzeichnet, dass** es des Weiteren die folgenden Schritte umfasst:
Erkennen eines Abschlusses des Änderns der Vergrößerung des Bildes; und
In-Kraft-Setzen der zweiten Anweisung, wenn der Abschluss des Änderns erkannt wird.

9. Bildaufnahme-Verfahren nach Anspruch 8, **dadurch gekennzeichnet, dass** es des Weiteren Schritte des Zählens einer vorgegebenen Zeit nach dem Abschluss des Änderns der Vergrößerung des Bildes umfasst, und wobei die zweite Anweisung in Kraft gesetzt wird, nachdem die Zähleinheit die vorgegebene Zeit gezählt hat.

10. Bildaufnahme-Verfahren nach Anspruch 8, **dadurch gekennzeichnet, dass** es des Weiteren Schritte umfasst, in denen das Bild als ein Standbild aufgezeichnet wird, wenn die zweite Anweisung ausgegebnen wird.

11. Bildaufnahme-Verfahren nach Anspruch 10, **dadurch gekennzeichnet, dass** es des Weiteren die folgenden Schritte umfasst:
Erkennen der ersten Anweisung beim Aufzeichnen des Bildes als ein Standbild; und
Aufzeichnen des Bildes, nachdem das Aufzeichnen des Bildes als ein Standbild abgeschlossen ist, wenn die erste Anweisung ausgegeben wird.

12. Computerprogramm-Erzeugnis, das so konfiguriert ist, dass es Programmanweisungen zur Ausführung auf einem Computersystem speichert, die das Computersystem befähigen, die folgenden Schritte durchzuführen:
Ausgeben einer ersten Anweisung zum Aufzeichnen eines mit einem Bildsensor gewonnenen Bildes als ein Bewegtbild;
Ausgeben einer zweiten Anweisung zum Aufzeichnen des mit dem Bildsensor gewonnenen Bildes als ein Standbild;
Ausgeben einer dritten Anweisung zum Ändern einer Vergrößerung des Bildes beim Aufzeichnen des Bildes als ein Bewegtbild; und
Außer-Kraft-Setzen der zweiten Anweisung während einer Periode, in der die Vergrößerung des Bildes geändert wird.

13. Computerprogramm-Erzeugnis nach Anspruch 12, das das Computersystem befähigt, des Weiteren die folgenden Schritte durchzuführen:
Erkennen eines Abschlusses des Änderns der Vergrößerung des Bildes; und
In-Kraft-Setzen der zweiten Anweisung, wenn der Abschluss des Änderns erkannt wird.

14. Computerprogramm-Erzeugnis nach Anspruch 13, das das Computersystem befähigt, des Weiteren Zählen einer vorgegebenen Zeit nach dem Abschluss des Änderns der Vergrößerung des Bildes durchzuführen, und wobei die zweite Anweisung in Kraft gesetzt wird, nachdem die Zähleinheit die vorgegebene Zeit gezählt hat.

15. Computerprogramm-Erzeugnis nach Anspruch 13, das das Computersystem befähigt, des Weiteren Aufzeichnen des Bildes als ein Standbild durchzuführen, wenn die zweite Anweisung ausgegeben wird.

16. Computerprogramm-Erzeugnis nach Anspruch 15, das das Computersystem befähigt, des Weiteren die folgenden Schritte durchzuführen:
Erkennen der ersten Anweisung beim Aufzeichnen des Bildes als ein Standbild; und
Aufzeichnen des Bildes, nachdem das Aufzeichnen des Bildes als ein Standbild abgeschlossen ist, wenn die erste Anweisung ausgegeben wird.

## Revendications

1. Appareil de capture d'image **caractérisé en ce qu'**il comprend :
un capteur d'image (1) qui sort une image ;
une unité d'instruction d'enregistrement d'image animée (132) qui émet une première instruction pour enregistrer l'image obtenue par le capteur d'image en tant qu'image animée ;
une unité d'instruction d'enregistrement d'image fixe (131) qui émet une deuxième instruction pour enregistrer l'image obtenue par le capteur d'image en tant qu'image fixe ;
une unité d'instruction de modification (134) qui émet une troisième instruction pour modifier un agrandissement de l'image pendant l'enregistrement de l'image en tant qu'image animée ; et
une unité d'annulation (5) qui invalide la deuxième instruction pendant une période où l'agrandissement de l'image est en cours de modification.

2. Appareil de capture d'image selon la revendication 1, **caractérisé en ce qu'**il comprend en outre :
une unité de détection de fin (5) qui détecte une fin de modification de l'agrandissement de l'image ; et
une unité de commande (5) qui valide la deuxième instruction lorsque l'unité de détection de fin détecte la fin de modification.

3. Appareil de capture d'image selon la revendication 2, **caractérisé en ce qu'**il comprend en outre :
une unité de comptage (501, 5) qui compte un temps prédéfini après la fin de modification de l'agrandissement de l'image ; et dans lequel
l'unité de commande (5) valide la deuxième instruction après que l'unité de comptage a compté le temps prédéfini.

4. Appareil de capture d'image selon la revendication 2, **caractérisé en ce qu'**il comprend en outre une unité d'enregistrement d'image fixe (172) qui enregistre l'image en tant qu'image fixe lorsque la deuxième instruction est émise.

5. Appareil de capture d'image selon la revendication 4, **caractérisé en ce qu'**il comprend en outre :
une unité de détection d'instruction d'enregistrement qui détecte la première instruction pendant l'enregistrement de l'image en tant qu'image fixe par l'unité d'enregistrement d'image fixe (132) ; et
une unité d'enregistrement d'image animée (171) qui enregistre l'image une fois que l'enregistrement de l'image en tant qu'image fixe par l'unité d'enregistrement d'image fixe est terminé, lorsque la première instruction est émise.

6. Appareil de capture d'image selon la revendication 1, **caractérisé en ce qu'**il comprend en outre :
une lentille (101) qui forme une image sur le capteur d'image ;
une unité d'entraînement (102) qui entraîne la lentille ;
une unité de commande de fonctionnement (5) qui commande le fonctionnement de l'unité d'entraînement conformément à la troisième instruction ;
une unité de détection (5) qui détecte un état de fonctionnement de l'unité d'entraînement ; et
une unité de détermination (5) qui détermine si l'agrandissement de l'image est modifié ou non sur la base de l'état de fonctionnement de l'unité d'entraînement détecté par l'unité de détection.

7. Procédé de capture d'image, **caractérisé en ce qu'**il comprend les étapes consistant à :
émettre une première instruction pour enregistrer une image obtenue par un capteur d'image en tant qu'image animée ;
émettre une deuxième instruction pour enregistrer l'image obtenue par le capteur d'image en tant qu'image fixe ;
émettre une troisième instruction pour modifier un agrandissement de l'image pendant l'enregistrement de l'image en tant qu'image animée ; et
invalider la deuxième instruction pendant une période où l'agrandissement de l'image est en cours de modification.

8. Procédé de capture d'image selon la revendication 7, **caractérisé en ce qu'**il comprend en outre les étapes consistant à :
détecter une fin de modification de l'agrandissement de l'image ; et
valider la deuxième instruction lorsque la fin de modification est détectée.

9. Procédé de capture d'image selon la revendication 8, **caractérisé en ce qu'**il comprend en outre les étapes consistant à compter un temps prédéfini après la fin de modification de l'agrandissement de l'image ; et dans lequel la deuxième instruction est validée après que l'unité de comptage a compté le temps prédéfini.

10. Procédé de capture d'image selon la revendication 8, **caractérisé en ce qu'**il comprend en outre les étapes consistant à enregistrer l'image en tant qu'image fixe lorsque la deuxième instruction est émise.

11. Procédé de capture d'image selon la revendication 10, **caractérisé en ce qu'**il comprend en outre les étapes consistant à :
détecter la première instruction pendant l'enregistrement de l'image en tant qu'image fixe ; et
enregistrer l'image une fois que l'enregistrement de l'image en tant qu'image fixe est terminé, lorsque la première instruction est émise.

12. Produit-programme d'ordinateur configuré pour stocker des instructions de programme à exécuter sur un système informatique permettant au système informatique d'effectuer :
l'émission d'une première instruction pour enregistrer une image obtenue par un capteur d'image en tant qu'image animée ;
l'émission d'une deuxième instruction pour enregistrer l'image obtenue par le capteur d'image en tant qu'image fixe ;
l'émission d'une troisième instruction pour modifier un agrandissement de l'image pendant l'enregistrement de l'image en tant qu'image animée ; et
l'invalidation de la deuxième instruction pendant une période où l'agrandissement de l'image est en cours de modification.

13. Produit-programme d'ordinateur selon la revendication 12, permettant au système informatique d'effectuer en outre :
la détection d'une fin de modification de l'agrandissement de l'image ; et
la validation de la deuxième instruction lorsque la fin de modification est détectée.

14. Produit-programme d'ordinateur selon la revendication 13, permettant au système informatique d'effectuer en outre le comptage d'un temps prédéfini après la fin de modification de l'agrandissement de l'image ; et dans lequel la deuxième instruction est validée après que l'unité de comptage a compté le temps prédéfini.

15. Produit-programme d'ordinateur selon la revendication 13, permettant au système informatique d'effectuer en outre l'enregistrement de l'image en tant qu'image fixe lorsque la deuxième instruction est émise.

16. Produit-programme d'ordinateur selon la revendication 15, permettant au système informatique d'effectuer en outre :
la détection de la première instruction pendant l'enregistrement de l'image en tant qu'image fixe ; et
l'enregistrement de l'image une fois que l'enregistrement de l'image en tant qu'image fixe est terminé, lorsque la première instruction est émise.
